Europäisches Patentamt

European Patent Office

Office européen des brevets

(11) Veröffentlichungsnummer: **0 019 840**
**B1**

(12) EUROPÄISCHE PATENTSCHRIFT

(45) Veröffentlichungstag der Patentschrift:
28.03.84

(51) Int. Cl.³: **B 62 K 21/22**

(21) Anmeldenummer: 80102807.7

(22) Anmeldetag: 21.05.80

(54) Verstellbar anklemmbarer Motorradlenker.

(30) Priorität: 25.05.79 DE 7915066 U

(43) Veröffentlichungstag der Anmeldung:
10.12.80 Patentblatt 80/25

(45) Bekanntmachung des Hinweises auf die Patenterteilung:
28.03.84 Patentblatt 84/13

(84) Benannte Vertragsstaaten:
AT BE CH DE FR GB IT LI LU NL SE

(56) Entgegenhaltungen:
FR - A - 1 063 818
GB - A - 457 019
US - A - 3 655 219

(73) Patentinhaber: Fehling, Ernst, Werler Strasse 1,
D-5757 Wickede-Wimbern (DE)

(72) Erfinder: Fehling, Ernst, Werler Strasse 1,
D-5757 Wickede-Wimbern (DE)

(74) Vertreter: Fritz, Herbert, Dipl.-Ing., Mühlenberg 74,
D-5760 Arnsberg 1 (DE)

Verstellbar anklemmbarer Motorradlenker

Die Erfindung bezieht sich auf einen verstellbar anklemmbaren Motorradlenker, bei dem ein gerades Mittelstück des aus Rohr gebogenen Lenkers mit zwei Klemmvorrichtungen an einem Kopfteil der Vorderradgabel befestigt ist. Dabei besteht jede Klemmvorrichtung aus einem Unterteil, einer Klemmplatte und zwei Klemmschrauben. Das Rohr, mit kreisrundem Querschnitt, wird von einer im Querschnitt halbkreisförmigen Lagerfläche des Unterteils jeweils aufgenommen.

Es besteht bei Motorradlenkern dieser Art (GB-A-457 019) die Möglichkeit, das Rohrmittelteil in verschiedene Drehstellungen um seine eigene Achse einzustellen, um den beiden Schenkeln des Lenkers, die sich an das Mittelteil anschliessen, eine mehr oder weniger geneigte Stellung zu geben.

Bei den bekannten Motorradlenkern dieser Art ist das im Querschnitt kreisrunde Rohrmittelteil zwischen die gewölbte Lagerfläche des Klemmunterteils und einer ebenfalls gewölbten Lagerfläche der Klemmplatte festgeklemmt und durch Reibungsschluss gehalten. Wenn sich dabei eine der Klemmschrauben lockert, dann geht der Reibungsschluss verloren, das Rohr kann sich beliebig drehen, der Lenker verliert seinen Halt und wird funktionsunfähig.

Die Aufgabe der Erfindung besteht darin, einen Motorradlenker und die dazu gehörigen Klemmvorrichtungen so auszubilden, dass der Lenker auch bei Lockerung der Klemmschrauben noch weiter festgehalten wird und funktionsfähig bleibt.

Diese Aufgabe wird gelöst durch einen Motorradlenker mit den im Patentanspruch 1 angegebenen Merkmalen.

Bei einem solchen Motorradlenker bleibt die Stellung auch bei Lockerung der Klemmschrauben erhalten, weil sie nicht allein auf Reibungsschluss, sondern auch auf Formschluss beruht.

Auch wenn der Druck der Klemmschrauben durch die Lockerung nachgelassen hat, vermag das Rohr sich nicht zu drehen, weil eine Drehbewegung durch die Anlage der ebenen Unterfläche der Klemmplatte an der im Rohr gebildeten ebenen Fläche verhindert wird. Die unterschiedliche Neigungsstellung des Lenkers erreicht man, indem man entsprechend die beiden Klemmschrauben unterschiedlich tief in die Gewindebohrung einschraubt, wodurch sich auch die Klemmplatte entsprechend geneigt einstellt. An der Klemmplatte ist jeweils oben im Bereich der Bohrung eine gewölbte Ausfräsung gebildet. Jede Klemmschraube ist durch einen Ring gesteckt, der mit einer entsprechend gewölbten unteren Fläche in der gewölbten Ausfräsung liegt. Wenn die Schraube fest angezogen wird, erfolgt die Druckübertragung vom Schraubenkopf an den gewölbten Flächen jeweils unabhängig davon, welche Neigung die Klemmplatte einnimmt.

Gemäss der weiteren zweckmässigen Ausführung der Erfindung hat die untere ebene Fläche einer jeden Klemmplatte eine Neigung in bezug auf die obere ebene Plattenfläche. Indem man die Platte jeweils so anordnet, dass die Neigung der unteren Ebene noch etwas steiler ist als die Neigung der oberen Ebene, kann man nach jeder Seite hin extreme Neigungsstellungen des Lenkers einstellen.

Ein Ausführungsbeispiel der Erfindung wird im folgenden näher beschrieben unter Bezugnahme auf die beiliegenden Zeichnungen.

Fig. 1 zeigt perspektivisch das Kopfteil der Vorderradgabel des Motorrades mit einem dort angebrachten Lenker;

Fig. 2 ist eine Vorderansicht in Richtung des Pfeiles II von Fig. 1;

Fig. 3 und 4 stellen Einzelheiten der Neuerung dar;

Fig. 5 zeigt in vergrössertem Massstab einen Querschnitt nach V–V von Fig. 2;

Fig. 6 zeigt den gleichen Querschnitt dar wie Fig. 5 in einer anderen Drehstellung des Rohres.

Der Lenker 10 ist aus einem Rohr mit kreisrundem Querschnitt gebogen. Es ist ein gerades Mittelteil 11 geformt, woran sich an jeder Seite ein Schenkel 12 anschliesst. Jeder Schenkel setzt sich in ein abgewinkeltes Endstück fort, an dem ein Handgriff aufgebracht ist.

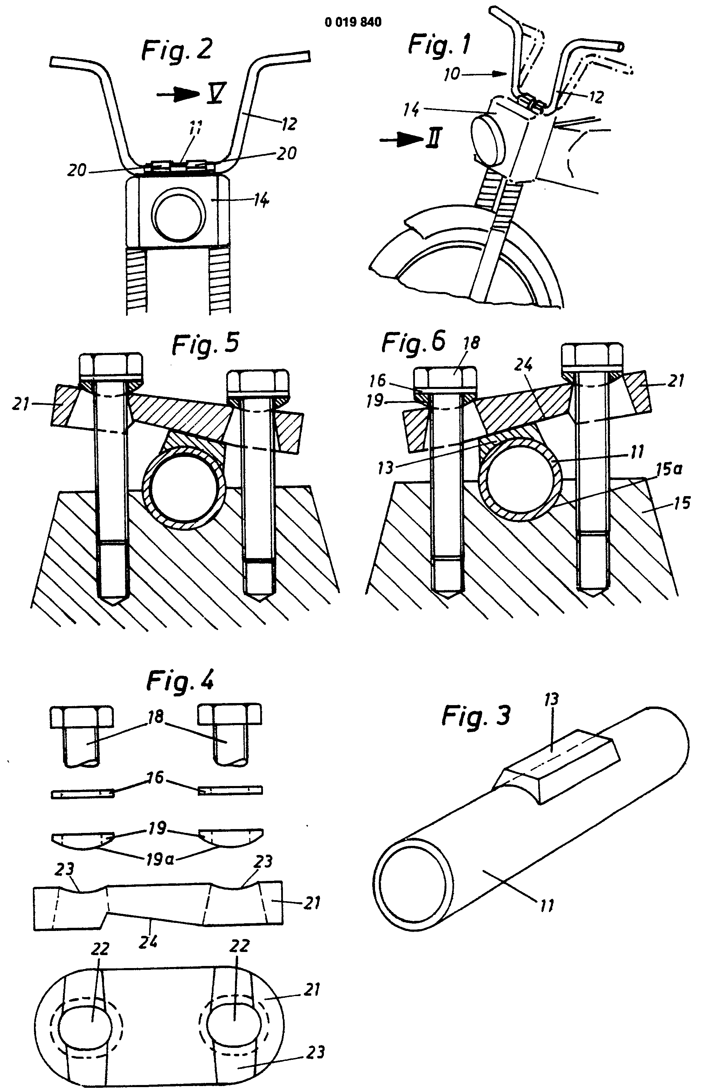

Der Lenker ist im Bereich seines geraden Mittelteiles 11 mittels zweier Klemmvorrichtungen 20 oben am Kopf 14 der Vorderradgabel befestigt. Es können mit Hilfe der beiden Klemmvorrichtungen verschiedene Drehstellungen des Mittelteiles 11 um die Rohrachse eingestellt werden, um eine steilere oder eine flachere Stellung der Schenkel 12 zu erhalten. Nach Fig. 1 ist die steilere Stellung des Schenkels 12 voll ausgezeichnet, während eine flachere Stellung gestrichelt dargestellt ist.

Jede Klemmvorrichtung 20 besteht aus einem Unterteil 15, zwei Klemmschrauben 18 und einer Klemmplatte 21. Weiterhin gehören zu jeder Klemmvorrichtung ein unterer Ring 19 und ein oberer Ring 16 (Fig. 4).

Das Unterteil 15 ist jeweils fest mit dem Kopf 14 der Vorderradgabel verbunden. An jedem Unterteil ist eine zylindrische, im Querschnitt halbkreisförmige Lagerfläche 15a gebildet. Beiderseits der Lagerfläche ist jeweils eine Gewindebohrung vorgesehen.

Die beiden Klemmschrauben 18 sind handelsübliche Teile.

An der Klemmplatte (Fig. 4) sind zwei Bohrungen 22 zur Aufnahme je einer Klemmschraube 18 gebildet. Der obere Rand einer jeden Bohrung ist etwas langgestreckt in Plattenlängsrichtung ausgebildet. Nach unten zu erweitert sich jede Bohrung in dieser Richtung. Im Bereich jeder Bohrung ist an der oberen Plattenfläche in Querrichtung eine etwas gewölbte Ausfräsung 23 gebildet. Zwischen den beiden Bohrungen 22 ist durch eine Ausnehmung der Klemmplatte eine Ebene 24 gebildet, die etwas in bezug auf die obere Platten ebene geneigt ist.

Die beiden unteren Ringe 19 haben eine flach zylindrisch gewölbte untere Fläche 19a in Anpassung an die Ausfräsungen 23. Der obere Ring 16 ist jeweils in handelsüblicher Weise oben und unten eben ausgebildet. Am Mittelteil 11 des Rohres ist jeweils im Bereich einer jeden Klemmvorrichtung durch eine aufgeschweisste Platte eine ebene Fläche 13 gebildet.

Der Lenker ist jeweils zwischen einem Unterteil 15 und einer Klemmplatte 21 festgeklemmt. Dabei liegt das Mittelteil 11 in der halbkreis-zylindrischen Lagerfläche 15a. Die Ebene 24 der Klemmplatte liegt an der Ebene 13 des Rohr-Mittelteils 11 an. Durch jede Bohrung 22 der Klemmplatte ist jeweils eine Klemmschraube 18 gesteckt und in die Gewindebohrung des Unterteils eingeschraubt. Jede Klemmschraube nimmt kopfseitig einen oberen Ring 16 und einen unteren Ring 19 auf. Dabei liegt die gewölbte Fläche 19a des unteren Rings in der ebenso gewölbten Ausfräsung 23 der Klemmplatte im Bereich der Bohrung.

Die gewünschte Drehstellung des Mittelteils ergibt sich durch eine schräge Einstellung der Klemmplatte, die wiederum durch unterschiedliches Einschrauben der beiden Klemmschrauben in die Gewindebohrungen erreicht wird.

Gemäss Fig. 5 ist die Klemmplatte von links oben nach rechts unten geneigt. Die Klemmplatte ist so angeordnet, dass die untere Ebene 24 noch etwas mehr in diesem Sinne geneigt ist als die obere Ebene der Klemmplatte. Dabei erreicht man eine extreme Neigung nach der einen Seite.

Gemäss Fig. 6 ist die Klemmplatte umgekehrt angeschraubt und die Neigung ist von rechts oben nach links unten. Man erreicht dadurch die extreme Stellung des Rohres nach der anderen Seite hin.

An jedem Schraubenkopf wird der Druck über den oberen Ring 16 und den unteren Ring 19 auf die Klemmplatte 21 übertragen. Die Druckübertragung vom Ring 19 auf die Klemmplatte erfolgt an den gewölbten Flächen 19a bzw. 23. In jeder geneigten Stellung der Klemmplatte ist die flächenmässige Anlage gewährleistet.

**Patentansprüche**

1. Verstellbar anklemmbarer Motorradlenker (10) mit den Merkmalen:
- ein gerades Mittelstück (11) des aus Rohr gebogenen Lenkers ist mit zwei Klemmvorrichtungen (20) an einem Kopfteil (14) der Vorderradgabel befestigt
- jede Klemmvorrichtung (20) besteht aus einem Unterteil (15), einer Klemmplatte (21) und aus zwei Klemmschrauben (18)
- das Rohr wird jeweils von einer im Querschnitt halbkreisförmigen Lagerfläche (15a) des Unterteils (15) aufgenommen,
gekennzeichnet durch die folgenden weiteren Merkmale:

- am Rohrmittelteil (11) ist im Bereich der Klemmvorrichtungen (20) eine ebene Fläche (13) parallel zum Rohrmittelteil vorgesehen,
- die untere Ebene (24) der Klemmplatte (21) liegt an der Ebene (13) des Rohrmittelteils (11) an,
- die Bohrungen (23) in der Klemmplatte (21) sind nach unten erweitert,
- die Klemmschrauben (18) sind jeweils durch einen Ring (19) gesteckt, der mit einer unten ausgebildeten gewölbten Fläche (19a) an einer gewölbten Ausfräsung (23) der Klemmplatte anliegt.

2. Motorradlenker nach Anspruch 1 dadurch gekennzeichnet, dass die untere Ebene (24) einer jeden Klemmplatte (21) eine Neigung in bezug auf die obere Ebene der Klemmplatte aufweist.

**Claims**

1. Adjustably clampable motorcycle handlebar (10) with the following characteristics:
- a straight central section (11) of the handlebar fabricated from a bent tube is fixed to a head part (14) of the frontwheel fork by means of two clamping devices (20)
- each clamping device (20) consisting of a lower part (15), a clamping plate (21) and two clamping screws (18)
- the tube being supported by a respective bearing surface (15a) of the lower part (15), said bearing surface being of semi-circular section,
and furthermore characterized by the following features:
- at the central section of the tube (11) within the region of the clamping device (20) there is provided a flat (13) parallel to the central section of the tube (11)
- the lower plane (24) of the clamping plate (21) adjoining the flat (13) of the central section of the tube (11)
- the bores (23) within the clamping plate (21) being widened downward
- the clamping screws (18) being each inserted through a ring (19), said ring abutting with a cambered area (19a) provided at its lower side a cambered recess (23) milled into the clamping plate.

2. Motorcycle handlebar as per claim 1, characterized by the lower plane (24) of each clamping plate (21) being inclined relative to the upper plane of the clamping plate.

**Revendications**

1. Guidon de motocycle (10) pouvant être serré dans des positions réglables, présentant les caractéristiques suivantes:
- une partie médiane (11) droite du guidon, qui est constitué par un tube cintré, est fixée par deux dispositifs de serrage (20) sur la tête (14) de la fourche avant;
- chacun des dispositifs de serrage (20) comprend une partie inférieure (15), une plaque de serrage (21) et deux vis de serrage (18);

- le tube est reçu, dans chaque partie inférieure (15), dans une surface d'appui (15a) de section semi-circulaire,

caractérisé par les particularités supplémentaires suivantes:

- la partie médiane du tube (11) présente, dans la zone des dispositifs de serrage (20), une surface plane (13) parallèle à la partie médiane du tube,
- le plan inférieur (24) de la plaque de serrage (21) s'appuie sur le plan (13) de la partie médiane (11) du tube,

- les trous (23) de la plaque de serrage (21) s'élargissent vers le bas,
- les vis de serrage (18) passent chacune dans une rondelle (19) qui s'appuie, par une surface (19a) courbe inférieure, sur un creux fraisé courbe (23) de la plaque de serrage.

2. Guidon de motocycle selon la revendication 1, caractérisé en ce que le plan inférieur (24) de ladite plaque de serrage (21) présente une inclinaison par rapport au plan supérieur de la plaque de serrage.

Fig. 2

Fig. 1

Fig. 5

Fig. 6

Fig. 4

Fig. 3